# EUROPEAN PATENT APPLICATION

(11) **EP 4 810 406 A1**
(43) Date of publication of application: **23.09.2026**
(21) Application number: 25185692.8
(22) Date of filing: 26.06.2025
(51) Int. Cl.: B65G 1/12, B65G 47/88, G07F 11/16

(54) **PICK-UP DEVICE, PICK-UP METHOD AND AUTOMATIC SHIPPING SYSTEM**

(30) Priority: 20.03.2025 CN 202510336244
(71) Applicant: Beijing Jingdong Yuansheng Technology Co., Ltd., Beijing 100176 (CN); Beijing Jingdong Qianshi Technology Co., Ltd., Beijing 100176 (CN)
(72) Inventor: WANG, Guopeng, Beijing, 100176 (CN)
(74) Representative: Page White Farrer

(57) **Abstract**

A pick-up device, a pick-up method and an automatic shipping system are provided. The pick-up device (PU) is used for picking up goods (GD) in a gravity conveying rack (GC) which are blocked by a blocking mechanism (BL) of the gravity conveying rack (GC), and includes: a bracket (10); a pushing mechanism (20) configured to push the goods (GD) away from the blocking mechanism (BL) ; and a lifting mechanism (30) arranged on the bracket (10) and configured to apply a lifting force to the goods (GD) so that the goods (GD) get over the blocking mechanism (BL) in a state that the goods (GD) are pushed away from the blocking mechanism (BL) . The present disclosure may improve the pick-up effect.

## Description

### TECHNICAL FIELD

The present disclosure relates to the field of warehousing and logistics, in particular to a pick-up device, a pick-up method and an automatic shipping system.

### BACKGROUND

In the field of logistics and warehouse management, the automatic movement of the goods is realized by the sliding of the goods along a slanted rack under self weight, so as to improve the picking efficiency and save the energy consumption. When it is necessary to pick up the goods from the slanted rack, a lifting pick-up method is used in the related art, that is, the lifting finger mechanism applies a lifting force to the goods blocked by the baffle at the bottom of the rack so that the goods get over the baffle to complete a pick-up operation.

### SUMMARY

It has been found through studies that, when the goods are lifted, there is a problem that the goods are unbalanced in stress and overturned due to the obstruction such as the friction of the baffle, which leads to a problem of goods pick-up failure.

In view of this, the embodiment of the present disclosure provides a pick-up device, a pick-up method and an automatic shipping system to improve the pick-up effect.

In one aspect of the present disclosure, a pick-up device for picking up goods in a gravity conveying rack which are blocked by a blocking mechanism of the gravity conveying rack is provided. The device includes: a bracket; a pushing mechanism configured to push the goods away from the blocking mechanism; and a lifting mechanism arranged on the bracket and configured to apply a lifting force to the goods so that the goods get over the blocking mechanism in a state that the goods are pushed away from the blocking mechanism.

In some embodiments, the pushing mechanism is configured to be restricted in position by the gravity conveying rack during a process that the lifting mechanism lifts the goods.

In some embodiments, the pushing mechanism includes: an abutment member configured to abut against the gravity conveying rack so as to be restricted in position by the gravity conveying rack during a process that the lifting mechanism lifts the goods; and a pushing block fixedly connected with the abutment member and configured to push the goods away from the blocking mechanism.

In some embodiments, the blocking mechanism includes two blocking portions located at a bottom end of the gravity conveying rack, and the pushing block is configured to push the goods between the two blocking portions; the abutment member includes a cross beam, the pushing block is located at the middle of the cross beam, and a dimension of the cross beam in a width direction of the gravity conveying rack is greater than a distance between the two blocking portions in the width direction of the gravity conveying rack so as to abut against the two blocking portions during the process that the lifting mechanism lifts the goods.

In some embodiments, the abutment member further includes: two side bars connected with both ends of the cross beam respectively to form a portal structure with the cross beam; wherein the two side bars are hinged with the bracket respectively.

In some embodiments, the lifting mechanism is further configured to restrict a position of at least one of the pushing block and the abutment member before the goods are lifted.

In some embodiments, the pick-up device further includes: an elastic member connected with the abutment member to apply an elastic force to the abutment member.

In some embodiments, the elastic member is connected with the bracket.

In some embodiments, the pick-up device includes at least two pushing mechanisms, and respective ends of the elastic member are connected with the at least two pushing mechanisms respectively.

In some embodiments, the pick-up device includes two pushing mechanisms and two lifting mechanisms corresponding to the two pushing mechanisms respectively, the abutment member in each pushing mechanism includes a cross beam and two side bars so that the two side bars are connected with both ends of the cross beam respectively to form a portal structure with the cross beam, the two side bars are hinged with the bracket respectively, and the elastic member includes a spring, one end of which is connected with the side bar of one of the two pushing mechanisms, and the other end of which is connected with the side bar of the other of the two pushing mechanisms.

In some embodiments, the blocking mechanism includes two blocking portions located at the bottom end of the gravity conveying rack, and the lifting mechanism includes: a lifting block fixedly connected with the bracket and configured to project between the two blocking portions to lift the goods at a lower side of the goods; wherein the lifting block is provided with a through portion through which the pushing block movably passes.

In some embodiments, the lifting mechanism is fixedly connected with the bracket to move synchronously with the bracket, and the pushing mechanism is movably arranged on the bracket.

In some embodiments, the pick-up device further includes: a first driving mechanism drivingly connected with the bracket and configured to drive the bracket to move, so as to drive the pushing mechanism and the lifting mechanism to move relative to the gravity conveying rack.

In some embodiments, at least one of the pushing mechanism and the lifting mechanism is configured to abut against the next goods in the gravity conveying rack after causing the goods at the bottommost end of the gravity conveying rack to get over the blocking mechanism.

In some embodiments, the pick-up device further includes: a driving member drivingly connected with the pushing mechanism, and configured to drive the pushing mechanism to rotate to a position where the goods are not blocked by the pushing mechanism during a process that the goods are lifted or after the goods are lifted beyond a top of the blocking mechanism.

In some embodiments, the lifting mechanism is movably connected with the bracket, and the pushing mechanism is fixedly arranged on the bracket to move synchronously with the bracket; wherein the pick-up device further includes: a first driving mechanism drivingly connected with the bracket and configured to drive the bracket to move, so as to drive the pushing mechanism and the lifting mechanism to move relative to the gravity conveying rack; and a second driving mechanism arranged on the bracket and drivingly connected with the lifting mechanism, wherein the second driving mechanism is configured to apply a lifting force to the goods by driving the lifting mechanism to move.

In some embodiments, the bracket includes a goods guiding mechanism and a receiving area, wherein the goods guiding mechanism is configured to guide received goods to the receiving area, and the lifting mechanism is fixedly connected with the goods guiding mechanism; wherein the pushing mechanism and the lifting mechanism are both located on a goods receiving side of the goods guiding mechanism.

In some embodiments, the pick-up device further includes: a vibration mechanism connected with the bracket and configured to apply an excitation force to the bracket and the lifting mechanism.

In some embodiments, the pick-up device further includes: a sensing element configured to sense that the goods enter the receiving area.

In one aspect of the present disclosure, an automatic shipping system is provided. The system includes: at least one gravity conveying rack; and the pick-up device described previously.

In one aspect of the present disclosure, a pick-up method of a pick-up device described previously is provided. The method includes: pushing the goods within a gravity conveying rack which are blocked by a blocking mechanism of a gravity conveying rack away from the blocking mechanism, through a pushing mechanism; and applying a lifting force to the goods by a lifting mechanism so that the goods get over the blocking mechanism in a state that the goods are pushed away from the blocking mechanism.

In some embodiments, the pick-up method further includes: restricting a position of the pushing mechanism by the gravity conveying rack during a process that the lifting mechanism lifts the goods.

In some embodiments, the lifting mechanism is fixedly connected with the bracket to move synchronously with the bracket, and the pushing mechanism is movably arranged on the bracket; the pick-up device further includes a first driving mechanism drivingly connected with the bracket; the step of pushing the goods within a gravity conveying rack which are blocked by a blocking mechanism of a gravity conveying rack away from the blocking mechanism, through a pushing mechanism includes: driving the bracket by the first driving mechanism to move, so that the pushing mechanism moves towards the blocking mechanism and pushes the goods to move away from the blocking mechanism.

In some embodiments, the pushing mechanism includes an abutment member and a pushing block fixedly connected with the abutment member; wherein the step of applying a lifting force to the goods by a lifting mechanism so that the goods get over the blocking mechanism in a state that the goods are pushed away from the blocking mechanism includes : driving the bracket by the first driving mechanism to move upwards so as to drive the pushing mechanism and the lifting mechanism to move upwards in a state that the pushing block pushes the goods away from the blocking mechanism; and continuing to drive the bracket by the first driving mechanism to move upwards so as to drive the lifting mechanism to move upwards to apply a lifting force to the goods, and restricting a position of the pushing mechanism by the gravity conveying rack so that the goods get over the blocking mechanism and the pushing mechanism after the pushing mechanism moves to a position where the abutment member abuts against the blocking mechanism.

In some embodiments, the pushing mechanism is rotatably connected with the bracket, and the pick-up device further includes an elastic member connected with the abutment member; wherein the pick-up method further includes: causing the lifting mechanism to abut against the next goods in the gravity conveying rack so that the next goods is not in contact with the blocking mechanism after causing the goods at the bottommost end of the gravity conveying rack to get over the blocking mechanism by the lifting mechanism; driving the bracket to move downwards by the first driving mechanism, so as to drive the lifting mechanism to move downwards and depart from a position where the lifting mechanism abuts against the next goods in the gravity conveying rack; applying an elastic force to the abutment member by the elastic member so that the pushing mechanism continues to be restricted in position through the gravity conveying rack and abuts against the next goods in the gravity conveying rack with a downward movement of the bracket; and repeatedly driving the bracket to move upwards and downwards by the first driving mechanism, so as to realize a continuous pick-up operation of a plurality of goods in the gravity conveying rack.

In some embodiments, the pick-up device further includes a driving member drivingly connected with the pushing mechanism; wherein the pick-up method further includes: driving the pushing mechanism by the driving member to rotate to a position where the goods are not blocked by the pushing mechanism during a process that the goods are lifted or after the goods are lifted beyond a top of the blocking mechanism.

In some embodiments, the lifting mechanism is movably connected with the bracket, the pushing mechanism is fixedly arranged on the bracket to move synchronously with the bracket, the pick-up device further includes a first driving mechanism and a second driving mechanism, wherein the first driving mechanism is drivingly connected with the bracket, and the second driving mechanism is arranged on the bracket and drivingly connected with the lifting mechanism; wherein the step of applying a lifting force to the goods by a lifting mechanism so that the goods get over the blocking mechanism in a state that the goods are pushed away from the blocking mechanism includes: driving the bracket by the first driving mechanism to move, so as to drive the pushing mechanism and the lifting mechanism to move towards the gravity conveying rack; and driving the lifting mechanism by the second driving mechanism to move so as to apply a lifting force to the goods in a state that the pushing mechanism pushes the goods away from the blocking mechanism.

According to the embodiment of the present disclosure, the pushing mechanism pushes the goods in the gravity conveying track away from the blocking mechanism, and the lifting mechanism applies a lifting force to the goods so that the goods get over the blocking mechanism in a state that the goods are pushed away from the blocking mechanism. Compared with the method of applying a lifting force to the goods blocked by the baffle at the bottom of the rack so that the goods get over the blocking mechanism in the related art, in the embodiment of the present disclosure, when a lifting force is applied to the goods, the goods have departed from the blocking mechanism, which may reduce or eliminate the obstruction caused by the baffle in stably lifting the goods, which may arise due to the factors such as: wider and thinner goods being prone to getting hooked by the baffle, poor machining or installation accuracy of the baffle, positioning deviation between the pick-up device and the goods in the rack, and protrusion on the outer packaging surface of the goods when the goods are lifted, thereby reducing the risks of overturning and a pick-up failure of the goods due to unbalanced stress and further improving the pickup effect.

### BRIEF DESCRIPTION OF THE DRAWINGS

The accompanying drawings which constitute a part of this specification, illustrate the embodiments of the present disclosure, and together with this specification, serve to explain the principles of the present disclosure.

The present disclosure may be more explicitly understood from the following detailed description with reference to the accompanying drawings, in which:
Fig. 1 is a schematic structural view of some embodiments of the automatic shipping system accord to the present disclosure;
Fig. 2 is a schematic structural view of other some embodiments of the automatic shipping system accord to the present disclosure;
Fig. 3 is a schematic structural view of some embodiments of the pick-up device according to the present disclosure;
Fig. 4 is a partial schematic view of the blocking portion restricting the position of the pushing mechanism in some embodiments of the pick-up device according to the present disclosure;
Fig. 5 is a schematic view of a pick-up process of the embodiment shown in Fig. 3;
Fig. 6 is a schematic view of a pick-up process according to other some embodiments of the pick-up device of the present disclosure;
Fig. 7 is a schematic view of a pick-up process according to still other some embodiments of the pick-up device of the present disclosure;
Fig. 8 is a flow chart of some embodiments of the pick-up method according to the present disclosure.

It should be understood that the dimensions of various parts shown in the accompanying drawings are not drawn according to actual proportional relations. In addition, the same or similar members are denoted by the same or similar reference numerals.

List of reference numerals:
10: bracket; 11: goods guiding mechanism; 12: receiving area;
20: pushing mechanism; 21: abutment member; 22: pushing block; 211: cross beam; 212: side bar; 23: push rod;
30: lifting mechanism; 31: lifting block; 311: through portion; 41: elastic member; 42: driving member;
51: first driving mechanism; 52: second driving mechanism;
61: vibration mechanism; 62: sensing element;
PU: pick-up device; GC: gravity conveying rack; BL: blocking mechanism;
GD: goods.

### DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noted that: relative arrangement of components and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, quantity or importance, but are merely used to distinguish between different parts. A word such as "include", "have" or variants thereof means that the element before the word covers the element(s) listed after the word without excluding the possibility of also covering other elements. The terms "up", "down", "left", "right", or the like are used only to represent a relative positional relationship, and the relative positional relationship may be changed correspondingly if the absolute position of the described object changes.

In the present disclosure, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present disclosure have the same meanings as understood by those skilled in the art of the present disclosure unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

In some related technologies, when it is necessary to pick up the goods from a slanted rack, a lifting pick-up method is used, that is, a lifting force is applied by the lifting finger mechanism on the goods blocked by the baffle at the bottom of the rack so that the goods get over the baffle to complete a pick-up operation.

It has been found through studies that when the goods are lifted, the contact resistance between the front end of the goods and the bottom baffle of the slanted rack is unbalanced, which leads to pick-up failure. This obstacle may be produced due to several reasons. For example, due to the installation of the rack plate, the position of the bottom baffle is misaligned, which causes that on side of the goods at a front end that is not substantively in contact with the baffle is in a suspended state. Upon lifting goods by the lifting finger mechanism, only the baffle on one side acts with one side of the goods at a front end, which leads to overturning. For another example, the package outer surface of the goods is present with a protrusion, which also results in unbalanced stress between the goods and the baffle.

In addition, the instantaneous stress when the goods are lifted is rather complicated, and the unbalanced stress on the guide plate, the surface package of the goods and the upper surface of the rack plate might cause the problems upon lifting goods. The above-described problems are more apparent when the goods are thinner or the goods are wider.

In view of this, the embodiment of the present disclosure provides a pick-up device, a pick-up method and an automatic shipping system to improve the pick-up effect.

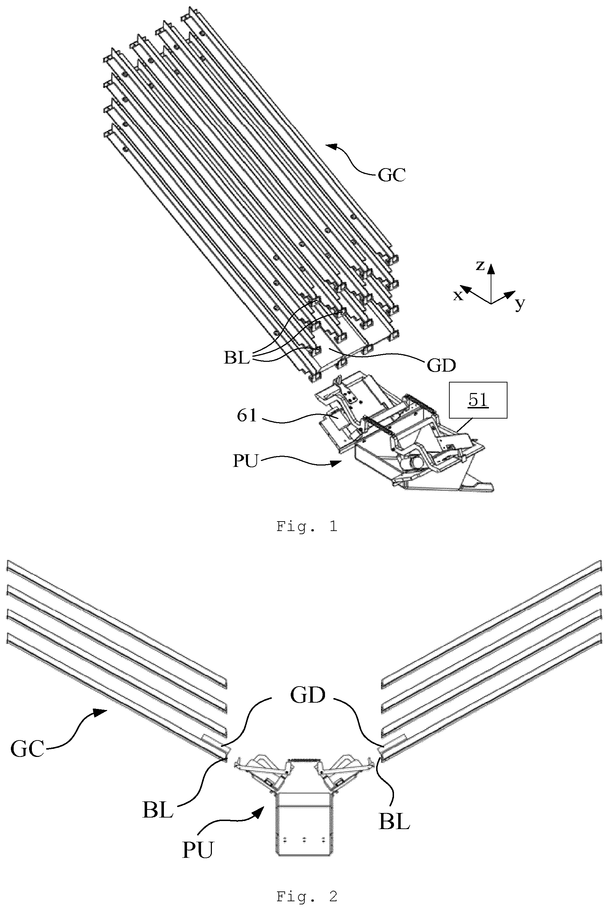

Fig. 1 is a schematic structural view of some embodiments of the automatic shipping system according to the present disclosure. Referring to Fig. 1, the embodiment of the present disclosure provides an automatic shipping system, which includes at least one gravity conveying rack GC and a pick-up device PU. The gravity conveying rack GC may have a slanted rack section, so that the goods move downward along the slanted rack section under the action of self weight. The slanted rack section may be an entirety of the gravity conveying track GC or a part of the gravity conveying track GC.

The automatic shipping system may include one or more gravity conveying racks GC. As shown in Fig. 1, the plurality of gravity conveying racks GC may be arranged in the form of multiple rows and multiple columns. The respective gravity conveying racks GC may be arranged parallel to each other. The gravity conveying rack GC may be formed by using adjacent elongated members with an inverted T-shaped structure, which are all obliquely arranged relative to a horizontal plane and parallel to each other.

For each group of adjacent elongated members forming the respective gravity conveying racks GC, the distance between adjacent elongated members may be set to be the same, and correspondingly, the widths of the respective gravity conveying racks GC are the same. The distances between adjacent elongated members may also be set to be different in at least some groups. Correspondingly, the rack width of the gravity conveying racks GC corresponding to at least some groups of adjacent elongated members is different.

The gravity conveying rack GC may accommodate one goods GD or multiple goods GD. The gravity conveying track GC has a blocking mechanism BL to block the goods GD to be picked up, and other goods are sequentially arranged on one side of the goods GD along the bottom surface of the rack. When the goods GD blocked by the blocking mechanism BL are picked up, adjacent goods GD thereof may slide under the action of gravity and be blocked by the blocking mechanism BL.

According to the requirements, the gravity conveying track GC may include one blocking mechanism BL or multiple blocking mechanisms BL. The blocking mechanism BL may include a blocking portion installed on the gravity conveying rack GC or formed in the gravity conveying rack GC. The blocking portion may be integrally formed with the elongated member forming the gravity conveying track GC, and may also be installed at the end of the elongated member through a connecting structure or a connecting piece. The blocking mechanism BL may also be located at other positions of the gravity conveying rack GC, for example, the blocking mechanism BL is installed on the frame for fixing the respective elongated members.

The blocking portion may use various structural forms that may realize the blocking function, such as a baffle, a stopper or a protruding structure.

Fig. 2 is a schematic structural view of some embodiments of the pick-up device accord to the present disclosure. As shown in Figs. 1 and 2, the gravity conveying rack GC may be arranged on one side or both sides of the pick-up device PU. The gravity conveying rack GC may also use other setting forms, for example, a structural form in which the pick-up device PU is centrally surrounded by multiple groups of gravity conveying rack GC.

The pick-up device PU may pick up the goods GD blocked by the blocking mechanism BL from the gravity conveying rack GC. For a plurality of goods GD stored on one or more gravity conveying racks GC, according to a preset pickup sequence, the pick-up device PU may be sequentially run to different gravity conveying racks GC for pickup operations.

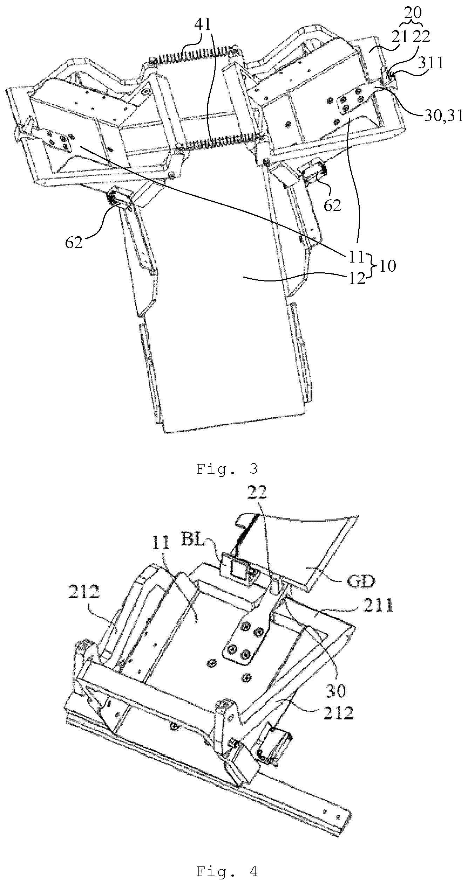

Fig. 3 is a schematic view of an application scenario in the embodiment of the pick-up device according to the present disclosure. Referring to Figs. 1 to 3, the embodiment of the present disclosure provides a pick-up device PU, for picking up the goods GD in the gravity conveying rack GC blocked by the blocking mechanism BL of the gravity conveying rack GC. The pick-up device PU includes: a bracket 10, a pushing mechanism 20 and a lifting mechanism 30. The pushing mechanism 20 is configured to push the goods GD away from the blocking mechanism BL. The lifting mechanism 30 is arranged on the bracket 10 and configured to apply a lifting force to the goods GD so that the goods GD get over the blocking mechanism BL in a state that the goods GD are pushed away from the blocking mechanism BL.

According to the requirements, the bracket 10 may be driven by the driving mechanism to move relative to the gravity conveying rack GC, for example, along the vertical direction, the horizontal direction or the direction parallel to the conveying direction of the gravity conveying rack GC.

In some embodiments, the bracket 10 may include a goods guiding mechanism 11 and a receiving area 12, wherein the goods guiding mechanism 11 is configured to guide the received goods GD to the receiving area 12. The structure of the goods guiding mechanism 11 may use a slanted chute as shown in Fig. 3. When the goods GD enter the slanted chute, under self gravity of the goods GD and the guidance function of the slanted chute, the goods GD will slide to the receiving area 12 away from the gravity conveying rack GC. The goods guiding mechanism 11 is not limited to the structural form of the slanted chute, but may also use other structural forms, such as a driving belt and a driving roller with power.

As shown in Fig. 3, the receiving area 12 may be a slide way adjacent to the goods guiding mechanism 11, and the bottom of the slide way may be docked with a trolley or a container receiving the goods, and intersect with the guiding direction of the goods guiding mechanism 11 to define an included angle. The receiving area 12 is not limited to the structural form of the slide way, but may also directly use a receiving container or a hollowed-out structure that allows the goods to pass through.

In other some embodiments, the bracket 10 may not include the goods guiding mechanism 11 or the receiving area 12. For example, in some scenes, the lifting mechanism 30 of the pick-up device PU only needs to lifting the goods GD from the gravity conveying rack GC, without providing the goods guiding mechanism 11 or the receiving area 12.

The pushing mechanism 20 is configured to push the goods GD away from the blocking mechanism BL. For example, a pushing force is applied to the surface of one side of the goods GD proximate to the blocking mechanism BL by the pushing mechanism 20, so that the goods GD and other goods GD that compress the goods GD in the rack move obliquely upward along the slanted rack. With the movement of the goods GD, the goods GD are out of contact with the blocking mechanism BL.

The pushing mechanism 20 may be installed with the bracket 10, for example, the pushing mechanism 20 shown in Fig. 3 is fixedly connected with the goods guiding mechanism 11 through a connecting piece. In other some embodiments, the pushing mechanism 20 may also be arranged outside the bracket 10 rather than connected with the bracket 10.

The lifting mechanism 30 is arranged on the bracket 10. The lifting mechanism 30 may apply a lifting force to the goods GD so that the goods GD may get over the blocking mechanism BL in a state that the goods GD are pushed away from the blocking mechanism BL. The lifting force here is a force exerted by the lifting mechanism 30 on a part of the goods (for example, the bottom surface of a front section of the goods) or an entirety (for example, the entire bottom surface of the goods) of the goods GD, and containing a vertically upward component, so as to make the part of the goods GD or the entirety of the goods GD move upward.

The lifting mechanism 30 may be arranged on the goods receiving side of the bracket 10, that is, one side of the bracket adjacent to the blocking mechanism BL. The lifting force of the lifting mechanism 30 on the goods GD may be applied to a portion of the bottom surface of the goods GD adjacent to the blocking mechanism BL, so that the lowest point of the goods GD may be elevated upward under the action of the lifting force, so as to get over the blocking mechanism BL. The lifting force of the lifting mechanism 30 may also act on other suitable positions on the goods GD.

The lifting mechanism 30 applies a lifting force to the goods GD in a state that the goods GD are pushed away from the blocking mechanism BL. As for a state that the goods GD are pushed away from the blocking mechanism BL, in some embodiments, the state is that the goods GD depart from the blocking mechanism BL without contact with the blocking mechanism BL at all, and at this time, the blocking mechanism BL has no resistance to the goods GD such as friction. In other some embodiments, the state is that the goods GD depart from the blocking mechanism BL and are still in partial contact with the blocking mechanism BL. At this time, the blocking mechanism BL has less resistance to the goods GD such as the friction, so that the obstruction influence of the blocking mechanism BL on the goods GD has been reduced.

In this embodiment, the pushing mechanism pushes the goods in the gravity conveying rack away from the blocking mechanism, and the lifting mechanism applies a lifting force to the goods so that the goods may get over the blocking mechanism and enter the goods guiding mechanism in a state that the goods are pushed away from the blocking mechanism. Compared with the method of applying a lifting force to the goods blocked by the baffle at the bottom of the rack so that the goods get over the blocking mechanism in the related art, in the embodiment of the present disclosure, when a lifting force is applied to the goods, the goods have departed from the blocking mechanism, which may reduce or eliminate the obstruction caused by the baffle in stably lifting the goods, which may arise due to the factors such as: wider and thinner goods being prone to getting hooked by the baffle, poor machining or installation accuracy of the baffle, positioning deviation between the pick-up device and the goods in the rack, and protrusion on the outer packaging surface of the goods when the goods are lifted, thereby reducing the risks of overturning and a pickup failure of the goods due to unbalanced stress and further improving the pickup effect.

Fig. 4 is a partial schematic view of the blocking portion restricting the position of the pushing mechanism in some embodiments of the pick-up device according to the present disclosure. Referring to Figs. 3 and 4, in some embodiments, the pushing mechanism 20 is configured to be restricted in position by the gravity conveying rack GC during the process that the lifting mechanism 30 lifts the goods GD.

During the process when the lifting mechanism 30 lifts the goods GD, the pushing mechanism 20 may be restricted in position by the bottom end of the gravity conveying rack GC or restricted in position by the blocking mechanism BL of the gravity conveying rack GC.

When the goods GD are pushed, the pushing mechanism 20 needs to act on the goods GD, so as to apply a pushing force to the goods GD, and correspondingly, it is also possible to form an obstacle to a downward movement of the goods GD. Moreover, by the position restricting function of the gravity conveying rack GC on the pushing mechanism 20, the pushing mechanism 20 may not move upward as the goods GD are lifted. In this way, during the process that the goods GD get over the blocking mechanism BL under the action of the lifting force, it is possible to conveniently get over the pushing mechanism 20 without interfering with the movement of the goods GD by the pushing mechanism 20.

Referring to Fig. 3, in some embodiments, the pushing mechanism 20 includes: an abutment member 21 and a pushing block 22. The abutment member 21 is configured to abut against the gravity conveying rack GC so that the abutment member 2 is restricted in position by the gravity conveying rack GC during the process that the lifting mechanism 30 lifts the goods GD. The pushing block 22 is fixedly connected with the abutment member 21 for pushing the goods GD away from the blocking mechanism BL.

When the abutment member 21 is driven to move relative to the goods GD, the pushing block 22 may be driven to push the goods GD away from the blocking mechanism BL. Moreover, when the abutment member 21 no longer moves upward when abutted by the gravity conveying rack GC, the goods GD is gradually disengaged from a state of being abutted by the pushing block 22 during the process of being lifted, and no longer limited by the pushing block 22.

The abutment member 21 may be movably connected with the bracket 10, for example, hinged by a pivot, or slidingly connected by a sliding block or the like. In this way, the abutment member 21 may move along with the movement of the bracket 10 when the abutment member 21 is not restricted in position by the gravity conveying rack GC, and moves relative to the bracket 10 when the abutment member 21 is restricted in position by the gravity conveying rack GC, for example, moving relatively or rotating relatively.

Referring to Figs. 1 and 4, in some embodiments, the blocking mechanism BL includes two blocking portions located at the bottom end of the gravity conveying track GC, and the pushing block 22 is configured to push the goods GD between the two blocking portions. The abutment member 21 includes a cross beam 211, and the pushing block 22 is located in the middle of the cross beam 211. The dimension of the cross beam 211 in the width direction of the gravity conveying track GC is greater than the distance between the two blocking portions in the width direction of the gravity conveying track GC, so as to abut against the two blocking portions during the process that the lifting mechanism 30 lifts the goods GD.

The two blocking portions at the bottom end of the gravity conveying rack GC are present with a preset distance therebetween, so as to block the goods GD and allow the pushing block 22 and the lifting mechanism 30 to enter. The dimensional relationship of the cross beam 211 and the distances between the two blocking portions in the width direction of the gravity conveying rack GC may allow that the blocking mechanism BL may reliably realize a position restricting function on the cross beam 211 by blocking the cross beam 211.

The pushing block 22 is arranged in the middle of the cross beam 211 without interfering with the two blocking portions. Here, the middle of the cross beam 211 includes but is not limited to the midpoint position an entirety of the cross beam 211. Specifically, it may be set at the midpoint position or other positions adjacent to the midpoint position according to the distance between the two blocking portions.

Referring to Fig. 3, in some embodiments, the abutment member 21 further includes two side bars 212, which are connected with both ends of the cross beam 211 respectively to form a portal structure with the cross beam 211. The two side bars 212 are hinged with the bracket 10 respectively.

As shown in Fig. 3, the side bar 212 may be provided as a straight bar, or a bent bar or other shapes based on a need to avoid other structures. The two side bars 212 may be hinged with the bracket 10 on one side away from the cross beam 211, so as to facilitate that the abutment 21 is rotatably connected relative to the bracket 10. With a portal structure formed by connecting two side bars 212 at both ends of the cross beam 211 respectively, it is possible to effectively reduce or avoid the interference on the movement of the goods guiding mechanism 11 or the goods GD.

In Fig. 3, the goods guiding mechanism 11 is located in the portal structure without interfering with the abutment member 21. The goods GD reaching the goods guiding mechanism 11 are also located in the portal structure, and move without interfering with the abutment member 21.

Referring to Figs. 3 and 4, in some embodiments, the lifting mechanism 30 is also configured to restrict at least one of the pushing block 22 and the abutment member 21 in position before lifting the goods GD.

Before the lifting mechanism 30 lifts the goods GD, by restricting at least one of the pushing block 22 and the abutment member 21 in position, the pushing mechanism 20 and the lifting mechanism 30 may first move synchronously before lifting the goods GD. The lifting mechanism 30 may act on the pushing block 22, and may also act on the abutment member 21 to realize a position restricting function on the pushing mechanism 20.

In Figs. 3 and 4, the lifting mechanism 30 is fixedly connected with the goods guiding mechanism 11, and projects outward relative to the goods guiding mechanism 11. The cross beam 211 of the abutment member 21 and the lifting mechanism 30 may abut against each other so as to maintain their relative positions. The cross beam 211 may be provided with a groove at a position corresponding to the lifting mechanism 30 to accommodate a partial structure of the lifting mechanism 30. In this way, the lifting mechanism 30 may restrict the abutment member 21 in position before lifting the goods GD.

Referring to Figs. 3 and 4, in some embodiments, the pick-up device PU further includes an elastic member 41 connected with the abutment member 21 to apply an elastic force to the abutment member 21. The elastic element 41 may include a tension spring, a compression spring, a torsion spring or an elastic sheet.

In some embodiments, the elastic member 41 is connected with the bracket 10. The elastic member 41 may be connected with the pushing mechanism 20 through one end thereof and connected with the bracket 10 through the other end thereof. For example, the pushing mechanism 20 and the bracket 10 are connected by a tension spring or a torsion spring. In Fig. 3, the elastic member 41 which is connected with the side bar 212 of the abutment member 21, may be specifically connected to a hanging post provided on the side bar 212, and there is a preset distance between the hanging post and the hinge point of the side bar 212, so that the elastic member 41 may apply torque to the abutment member 21 through an elastic force.

The elastic member 41 applies an elastic force to the abutment member 21, so that before or after the abutment member 21 moves to the position restricted by the gravity conveying rack GC, the abutment member 21 may abut against the lifting mechanism 30 so as to move synchronously. During the process that the abutment member 21 moves to the position restricted by the gravity conveying rack GC, the elastic member 41 may cause the abutment member 21 to press the gravity conveying rack GC, which may make the blocking mechanism BL more stable relative to the gravity conveying rack GC.

Referring to Fig. 3, in some embodiments, the pick-up device PU includes at least two pushing mechanisms 20, and respective ends of the elastic member 41 are connected with the at least two pushing mechanisms 20 respectively. Here, the number of the pushing mechanisms 20 may be two or three or more. The number of the lifting mechanism 30 may be the same as that of the pushing mechanism 20, in one-to-one correspondence with the pushing mechanism 20. In other some embodiments, the number of the lifting mechanism 30 may be more than or less than that of the pushing mechanism 20.

A plurality of pushing mechanisms 20 may realize a pickup operation of the gravity conveying rack GC in a plurality of directions, which is conductive to reducing the orientation adjustment requirements of the bracket and simplifying the adjustment control difficulty of the bracket. On this basis, each end of the elastic member 41 may be connected with the at least two pushing mechanisms 20 respectively, which is conductive to causing each pushing mechanism 20 to receive more balanced elastic force and reducing the used quantity of the elastic member 41, and conductive to reducing the complexity and cost of the pick-up device.

Corresponding to this embodiment, the bracket 10 may include at least two goods guiding mechanisms 11. At least two goods guiding mechanisms 11 may be in one-to-one correspondence with at least two pushing mechanisms 20.

As shown in Fig. 3, specifically, the pick-up device PU may include two pushing mechanisms 20 and two lifting mechanisms 30 corresponding to the two pushing mechanisms 20 respectively. The abutment member 21 in each pushing mechanism 20 includes a cross beam 211 and two side bars 212, wherein the two side bars 212 are connected with both ends of the cross beam 211 respectively to form a portal structure with the cross beam 211. The two side bars 212 are hinged with the bracket 10 respectively, and the elastic member 41 includes a spring, one end of which is connected with the side bar 212 of one of the two pushing mechanisms 20 and the other end of which is connected with the side bar 212 of the other of the two pushing mechanisms 20.

In Fig. 3, two pushing mechanisms 20 are located on both opposite sides of the receiving area 12 respectively. The two goods guiding mechanisms 11 corresponding to the two pushing mechanisms 20 are also located on both opposite sides of the receiving area 12 respectively, and guide the goods GD toward a center. Fig. 3 shows an elastic member 41 containing two springs, and both ends of each spring are connected to the spring hanging posts at the sites of the respective side bars 212 of the two pushing mechanisms 20 adjacent to the receiving area 12 respectively. Two springs may be spacedly arranged in the width direction of the goods guiding mechanism 11, so as to form a balanced and stable elastic force for the pushing mechanism 20 in the width direction. The springs may act on the two pushing mechanisms 20 respectively, so that the two pushing mechanisms 20 are restricted in position by the two lifting mechanisms 30 respectively, so that it is more balanced and stable in stress, which is conductive to simplifying the complexity of the pick-up device.

Referring to Figs. 3 and 4, in some embodiments, the blocking mechanism BL includes two blocking portions located at the bottom end of the gravity conveying track GC, and the lifting mechanism 30 includes a lifting block 31. The lifting block 31 is fixedly connected with the bracket 10 and configured to project between the two blocking portions to lift the goods GD at the lower side of the goods GD. The lifting block 31 has a through portion 311 through which the pushing block 22 movably passes.

As shown in Fig. 3, the lifting mechanism 30 may be structured such that one end is fixedly connected with the goods guiding mechanism 11 through a connecting piece, and the other end projects relative to the goods guiding mechanism 11, and the lifting block 31 is a projecting portion of the lifting mechanism 30. The lifting mechanism 30 is located between two blocking portions without interfering with the blocking portions when the goods GD are lifted.

As shown in Fig. 3, the lifting block 31 may include a first surface that is substantially parallel to the bottom surface of the slanted chute (i.e., the goods guiding mechanism 11) and a second surface located at an extreme end of the lifting block 31. The first surface and the second surface intersect to form a sharp angle, which may be an acute angle. The first surface may be used for guiding the goods GD to slide, and the second surface may be used for abutting against the next goods GD to cause the same to depart from the blocking mechanism BL.

The pushing block 22 may be provided as a part or an entirety of a cone, or a part or an entirety of pyramid. The through portion 311 may be configured to be mated with the outer contour of the pushing block 22 so that the pushing block 22 moves within the through portion 311.

The pushing block 22 maintains its position relative to the gravity conveying rack GC with its fixedly connected abutment member 21 restricted in position, and the lifting block 31 applies a lifting force to the goods GD by ascending. Correspondingly, the pushing block 22 and the through portion 311 of the lifting block 31 move relatively without interfering with each other.

In other some embodiments, the pushing block 22 may also be arranged on one side or both sides of the lifting block 31 along the width direction of the rack, so that it is possible to avoid the motion interference between the lifting block 31 and the pushing block 22 without providing the through portion 311 on the lifting block 31.

In the above-described embodiments, the lifting mechanism 30 may be fixedly connected with the bracket 10 to move synchronously with the bracket 10. The pushing mechanism 20 is movably arranged on the bracket 10, for example, hinged or slidingly connected with the bracket 10.

Referring to Fig. 1, in some embodiments, the pick-up device PU further includes a first driving mechanism 51, which is drivingly connected with the bracket 10 and configured to drive the bracket 10 to move, so as to drive the pushing mechanism 20 and the lifting mechanism 30 to move relative to the gravity conveying rack GC.

The first driving mechanism 51 may include a rail mechanism, and may realize the driving in the x direction, the z direction and the y direction perpendicular to the x direction and the z direction. The first driving mechanism 51 may drive the pushing mechanism 20 and the lifting mechanism 30 to move by driving the bracket 10 to move, so that the pushing mechanism 20 and the lifting mechanism 30 approach the blocking mechanism BL, and the pushing mechanism 20 pushes the goods GD away from the blocking mechanism BL. The method of applying a lifting force to the goods GD by the lifting mechanism 30 may be realized by the first driving mechanism 51, and may also be realized by other mechanisms.

Referring to Fig. 3, in some embodiments, the bracket 10 includes a goods guiding mechanism 11 and a receiving area 12, the goods guiding mechanism 11 is configured to guide the received goods GD to the receiving area 12, and the lifting mechanism 30 is fixedly connected with the goods guiding mechanism 11; wherein the pushing mechanism 20 and the lifting mechanism 30 are both located on a goods receiving side of the goods guiding mechanism 11.

The goods guiding mechanism 11 may guide the goods GD picked up by the lifting mechanism 30 to the receiving area 12. As shown in Fig. 3, the goods guiding mechanism 11 may use a slanted U-shaped chute structure, and the lifting mechanism 30 may be fixedly connected with the goods guiding mechanism 11 through a connecting piece such as a bolt or a rivet. In this way, the goods GD may slide down toward the receiving area 12 under the action of gravity when in contact with the surface of the U-shaped chute structure. The receiving area 12 may include a chute to convey the goods GD to other mechanisms or areas through the guiding function of the chute.

Referring to Fig. 1, in some embodiments, the pick-up device PU further includes an vibration mechanism 61, which is connected with the bracket 10 and configured to apply an excitation force to the bracket 10 and the lifting mechanism 30.

The vibration mechanism 61 may include an vibrating motor capable of applying an excitation force to the structure on which it is installed. The vibration mechanism 61 may be arranged on the side wall or bottom wall of the goods guiding mechanism 11, and may also be arranged at other positions on the bracket 10.

The vibration mechanism 61 may cause the goods guiding mechanism 11 and the lifting mechanism 30 to vibrate during the pick-up process, so that the goods GD are lifted more smoothly and enter the goods guiding mechanism 11, and rapidly slide down in the goods guiding mechanism 11, thereby reducing the risk that the goods are stuck in the lifting mechanism 30 and the goods guiding mechanism 11.

Referring to Fig. 3, in some embodiments, the pick-up device PU further includes a sensing element 62 configured to sense that the goods GD enter the receiving area 12. The sensing element 62 may include an infrared, ultrasonic, laser, contact or proximity sensor, which may detect whether the goods GD enter the receiving area 12 through the goods guiding mechanism 11. For example, the sensing element 62 may include a double photoelectric cell arranged at the position of the slanted chute of the goods guiding mechanism 11 proximate to the receiving area 12. The sensing element 62 may also be arranged at the position between the receiving area 12 and the goods guiding mechanism 11 or within the receiving area 12.

The goods GD block the optical path of the light intrusion detector to determine that the goods GD have passed through this position, so as to judge whether the goods GD have reached the receiving area 12. The sensing element 62 may also be used for sensing whether the goods GD are stuck in the goods guiding mechanism 11.

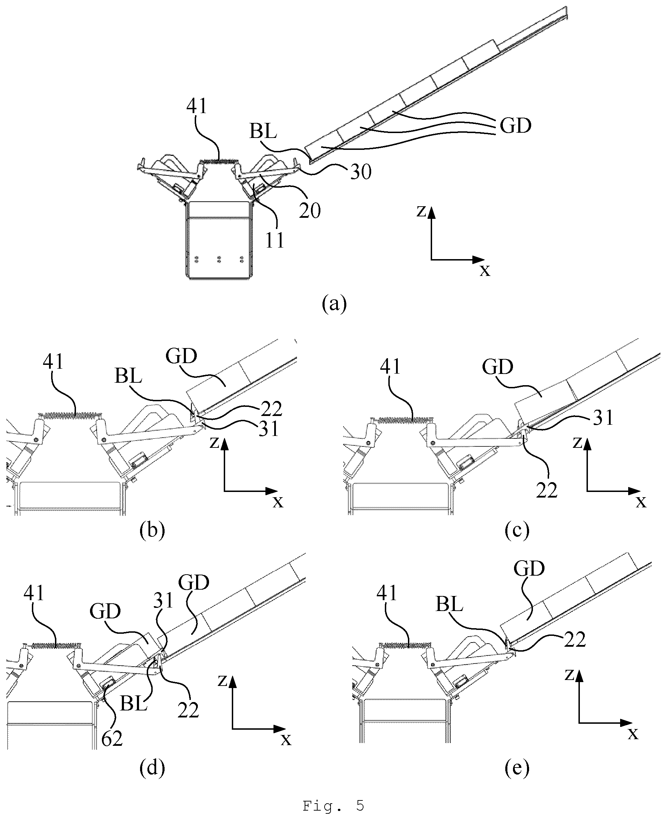

Fig. 5 is a schematic view of a pick-up process of the embodiment shown in Fig. 3. Referring to Fig. 5 (d), in some embodiments, at least one of the pushing mechanism 20 and the lifting mechanism 30 is configured to abut against the next goods GD in the gravity conveying track GC after the goods GD at the bottommost end of the gravity conveying track GC get over the blocking mechanism BL.

In Fig. 5 (d), the front end of the lifting block 31 of the lifting mechanism 30 may abut against the end surface of the subsequent goods GD after the goods GD at the lowermost end of the rack get over the blocking mechanism BL, so that the goods GD may not continue to slide down to a blocking position of the blocking mechanism BL. In Fig. 5 (e), as the lifting mechanism 30 descends, the subsequent goods GD are pushed by the pushing mechanism 20 restricted in position.

In this embodiment, by cooperating with the lifting of the lifting mechanism 30 and the abutment of the pushing mechanism 20 and the lifting mechanism 30 against the next goods GD, a pick-up operation may be continuously performed on a plurality of goods GD without frequently pushing the goods GD away from the blocking position of the blocking mechanism BL through the pushing mechanism 20, thereby effectively improving the pickup efficiency.

An example of a specific pick-up process in the embodiment of the pick-up device shown in Fig. 3 will be described below based on Figs. 5 (a) to (e).

When the pick-up device PU located on the left side needs to pick up the goods GD in a certain rack on the right side, in Fig. 5 (a), the bracket 10 may be driven by the first driving mechanism 51 to move in a lane, so that the bracket 10 moves to a corresponding gravity convey rack GC. Correspondingly, the bracket 10 drives the pushing mechanism 20 and the lifting mechanism 30 connected therewith to move synchronously. This movement process may be the movement in at least one of the x direction, the y direction and the z direction in Fig. 1.

When the bracket 10 reaches a pick-up position corresponding to the rack in the lane, the bracket 10 may be driven by the first driving mechanism 51 to translate along the x direction. Referring to Fig. 5 (b), the pushing block 22 of the pushing mechanism 20 is driven to contact with the goods GD and apply a pushing force, so that the goods GD blocked by the blocking mechanism BL slides obliquely upward along the surface of the rack and depart from the blocking mechanism BL. At this time, the lifting block 31 of the lifting mechanism 30 reaches a lower side of the goods GD.

In Fig. 5 (c), the bracket 10 and the lifting mechanism 30 connected to the bracket 10 as a whole may be translated along the z direction by the first driving mechanism 51 so as to apply a lifting force to the goods GD by the lifting block 31, so that the lower end of the goods GD gradually departs from the surface of the rack. Moreover, during the process of lifting the goods GD, the abutment member 21 of the pushing mechanism 20 is restricted in position by the blocking mechanism BL without moving upward together with the bracket 10 and the lifting mechanism 30. During the process of lifting the goods GD, the vibration mechanism 61 may continuously apply an excitation force to the goods guiding mechanism 11 during the lifting process of the pick-up device.

When the goods GD are lifted beyond a height position of the blocking mechanism BL and the pushing block 22, the goods GD get over the blocking mechanism BL and reach the goods guiding mechanism 11 under own gravity and an extrusion action of other goods GD at its rear side. Moreover, in Fig. 5 (d), the tip of the lifting block 31 abuts against the next goods GD so as to cause the next goods GD not to slide down to a blocking position of the blocking mechanism BL.

Referring to Fig. 5 (d), the slanted smooth surface of the goods guiding mechanism 11 may guide the goods GD to further slide to the left and enter the receiving area 12 at this time. The sensing element 62 may sense that the goods GD bypass the goods guiding mechanism 11 and reach the receiving area 12.

Referring to Fig. 5 (e), the bracket 10 and the lifting mechanism 30 connected to the bracket 10 as a whole may be translated by the first driving mechanism 51 along the opposite direction of the z direction (i.e., moved downward) . As the lifting block 31 moves downward, the pushing mechanism 20 still maintains such a state as to be restricted in position by the blocking mechanism BL under the action of the spring, to substitute for the lifting block 31 and continue to abut against the next goods GD so as to cause the next goods GD not to slide down to the blocking position of the blocking mechanism BL.

On this basis, the pick-up device PU may drive the lifting mechanism 30 to ascend and descend by repeatedly lifting the bracket 10, so as to achieve a pick-up operation of multiple goods in the same rack with better efficiency. The pick-up device PU may also continue to descend in the state of Fig. 5 (e), so that the pushing mechanism 20 abuts against the lifting mechanism 30 under the action of the elastic member 41, and then moves to other racks along with the bracket to continue a pick-up operation.

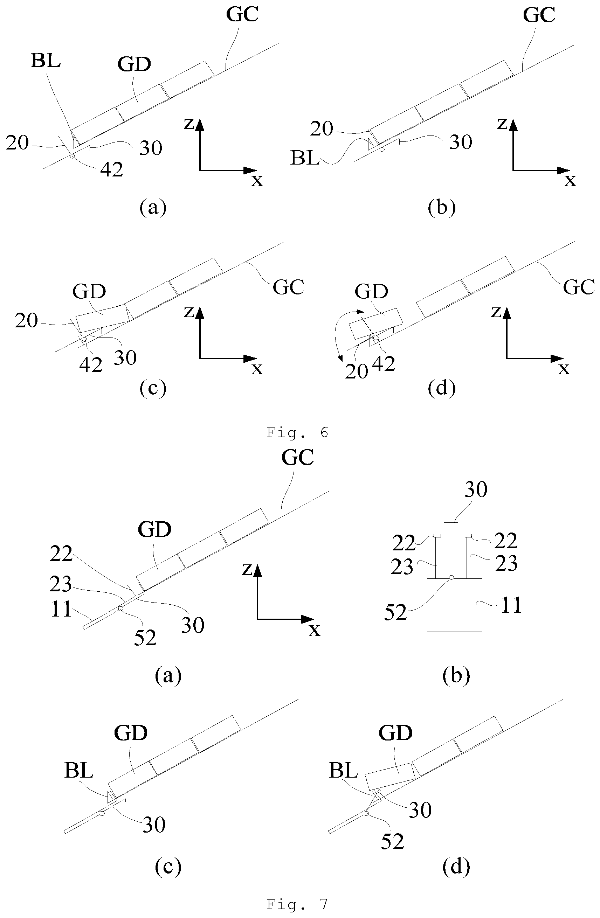

Fig. 6 is a schematic view of a pick-up process according to other some embodiments of the pick-up device of the present disclosure. Referring to Fig. 6, in some embodiments, the pick-up device PU further includes a driving member 42, which is drivingly connected with the pushing mechanism 20 and configured to drive the pushing mechanism 20 to rotate to a position where it does not block the goods GD during the process that the goods GD are lifted or after the goods GD are lifted beyond the top of the blocking mechanism BL.

In Fig. 6, a driving member 42 is shown by a circle, and the driving member 42 may include an electric motor, a pneumatic motor or other driving mechanisms available. The driving member 42 is connected with the pushing mechanism 20, which may rotate the pushing mechanism 20 so as to avoid a position where the goods GD are blocked. In this way, a more concise structure is realized, which facilitates solving the interference problem of the pushing mechanism 20 with the goods GD when the goods GD are lifted to get over the blocking mechanism BL.

The driving member 42 may drive the pushing mechanism 20 to rotate to a position where the goods GD are not blocked during the process that the goods GD are lifted or after the goods GB are lifted beyond the top of the blocking mechanism BL.

An example of a specific pick-up process in the embodiment of the pick-up device will be described below based on Figs. 6 (a)to (d).

In Fig. 6 (a), the bracket 10 may be driven to move, so that the pushing mechanism 20 and the lifting mechanism 30 move to a corresponding position of the gravity conveying rack GC that the goods are to be picked up, and at this time, the pushing mechanism 20 is at a first rotational position relative to the lifting mechanism 30.

By driving the bracket 10 to move, the pushing mechanism 20 and the lifting mechanism 30 may be driven to move at least along the x direction, and may also move obliquely upward to contain displacement components in the x direction and the z direction. In Fig. 6 (b), the pushing mechanism 20 pushes the goods GD upward along the surface of the rack, and the lifting mechanism 30 has reached a lower side of the goods GD at this time.

By driving the bracket 10 to move, the pushing mechanism 20 and the lifting mechanism 30 may be driven to move along the z direction, so as to form a lifting force to the goods GD by the lifting mechanism 30. In Fig. 6 (c), it may be seen that a part of the goods GD has departed from the surface of the rack and its height has get over the blocking mechanism BL, but the goods GD has not entered the goods guiding mechanism 11 under the blocking effect of the pushing mechanism 20.

The pushing mechanism 20 is put down by the driving member 42, and as shown by an arc line with an arrow in Fig. 6 (d), the pushing mechanism 20 is turned over towards one side of the goods guiding mechanism 11, and at this time, the pushing mechanism 20 is located at a second rotational position relative to the bracket 10. In this way, the goods GD may get over the blocking mechanism BL to slide to the goods guiding mechanism 11.

Fig. 7 is a schematic view of a pick-up process according to still other some embodiments of the pick-up device of the present disclosure. For the embodiment in which the lifting mechanism 30 applies a lifting force to the goods GD through other mechanisms, referring to Figs. 1 and 7, in some embodiments, the lifting mechanism 30 is movably connected with the bracket 10, and the pushing mechanism 20 is fixedly arranged on the bracket 10 to move synchronously with the bracket 10.

The pick-up device PU further includes: a first driving mechanism 51 and a second driving mechanism 52. The first driving mechanism 51 is drivingly connected with the bracket 10, and configured to drive the bracket 10 to move, so as to drive the pushing mechanism 20 and the lifting mechanism 30 to move relative to the gravity conveying rack GC. The second driving mechanism 52 is arranged on the bracket 10 and drivingly connected with the lifting mechanism 30. The second driving mechanism 52 is configured to apply a lifting force to the goods GD by driving the lifting mechanism 30 to move.

In Fig. 7 (b), the pushing mechanism 20 may include a push rod 23 fixedly connected with the goods guiding mechanism 11 and a pushing block 22 fixedly connected with the end of the push rod 23. The lifting mechanism 30 may be arranged between two groups of pushing blocks 22 and the push rod 23, and movably connected with the goods guiding mechanism 11. The movable connection here may include a rotary connection, and may also include a movable connection.

The lifting mechanism 30 is also connected to the second driving mechanism 52 indicated by a circle. The second driving mechanism 52 may include an electric motor, a pneumatic motor or other mechanisms capable of providing a driving torque. The second driving mechanism 52 may cause the lifting mechanism 30 to perform at least one motion of movement and rotation relative to the goods guiding mechanism 11 when it is necessary to lift the goods GD, thereby forming a lifting force to the goods GD by the lifting mechanism 30.

An example of a specific pick-up process in the embodiment of the pick-up device will be described below based on Figs. 7 (a)to (d).

In Fig. 7 (a), by driving the bracket 10 to move, the pushing mechanism 20 and the lifting mechanism 30 may be moved to a corresponding position of the gravity conveying track GC that the goods are to be picked up, and the lifting mechanism 30 is located at a first rotational position relative to the goods guiding mechanism 11 at this time.

By driving the bracket 10 to move, the pushing mechanism 20 and the lifting mechanism 30 may be driven to move at least along the x direction, and may also move obliquely upward to contain displacement components in the x direction and the z direction. In Fig. 7 (c), the pushing block 22 of the pushing mechanism 20 pushes the goods GD upward along the surface of the rack, and the lifting mechanism 30 has reached a lower side of the goods GD at this time.

The lifting mechanism 30 is rotated by the second driving mechanism 52 to form a lifting force to the goods GD. In Fig. 7 (d), it may be seen that the lifting mechanism 30 is located at a second rotational position relative to the goods guiding mechanism 11, and a part of the goods GD has been lifted to a position away from the surface of the rack at this time, so that the height of the goods GD may get over the blocking mechanism BL. In this way, the goods GD may get over the blocking mechanism BL under the action of own weight and the extrusion of other goods GD.

Various embodiments of the pick-up device PU described above may be applied to various types of systems that need to pick up the goods from the gravity conveying rack GC, which may include but are not limited to an automatic shipping system.

The embodiment of the present disclosure provides an automatic shipping system, which includes: at least one gravity conveying rack GC and a pick-up device PU according to any one of the aforementioned embodiments. The pick-up device PU and the automatic shipping system described above may be applied to an automatic medicine dispensing machine, a vending machine and a warehousing system.

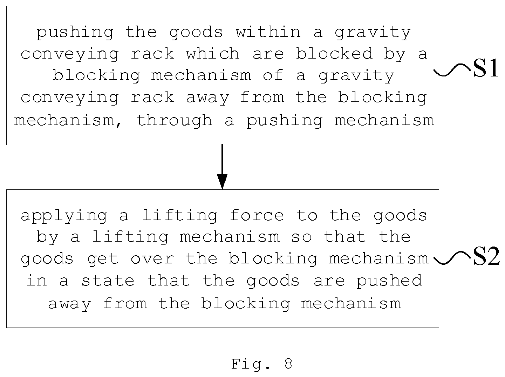

Fig. 8 is a flow chart of some embodiments of the pick-up method according to the present disclosure. Referring to Fig. 8, based on the pick-up device PU of various embodiments described previously, the embodiment of the present disclosure also provides a pick-up method of the pick-up device PU according to the embodiments described previously. The pick-up method includes: Step S1 and Step S2.

In Step S1, the goods GD in the gravity conveying rack GC which are blocked by the blocking mechanism BL of the gravity conveying rack GC are pushed away from the blocking mechanism BL by the pushing mechanism 20.

In Step S2, a lifting force is applied to the goods GD by the lifting mechanism 30 so that the goods GD get over the blocking mechanism BL in a state that the goods GD are pushed away from the blocking mechanism BL.

In this embodiment, the pushing mechanism pushes the goods in the gravity conveying track away from the blocking mechanism, and the lifting mechanism applies a lifting force to the goods so that the goods get over the blocking mechanism and enter the goods guiding mechanism in a state that the goods are pushed away from the blocking mechanism. Compared with the method of applying a lifting force to the goods blocked by the baffle at the bottom of the rack so that the goods get over the blocking mechanism in the related art, in the embodiment of the present disclosure, when a lifting force is applied to the goods, the goods have departed from the blocking mechanism, which may reduce or eliminate the obstruction caused by the baffle in stably lifting the goods, which may arise due to the factors such as: wider and thinner goods being prone to getting hooked by the baffle, poor machining or installation accuracy of the baffle, positioning deviation between the pick-up device and the goods in the rack, and protrusion on the outer packaging surface of the goods when the goods are lifted, thereby reducing the risks of overturning and a pickup failure of the goods due to unbalanced stress and further improving the pick-up effect.

In some embodiments, the pick-up method further includes: restricting the pushing mechanism in position by the gravity conveying rack GC during a process that the lifting mechanism 30 lifts the goods GD.

In some embodiments, the lifting mechanism 30 is fixedly connected with the bracket 10 to move synchronously with the bracket 10, and the pushing mechanism 20 is movably arranged on the bracket 10; the pick-up device PU further includes a first driving mechanism 51 which is drivingly connected with the bracket 10. Correspondingly, in Step S1, the step of pushing the goods GD within a gravity conveying rack GC which are blocked by a blocking mechanism BL of a gravity conveying rack GC away from the blocking mechanism BL, through a pushing mechanism 20 includes: driving the bracket 10 to move by the first driving mechanism 51, so that the pushing mechanism 20 moves towards the blocking mechanism BL, and pushes the goods GD to move away from the blocking mechanism BL.

In some embodiments, the pushing mechanism 20 includes an abutment member 21 and a pushing block 22 fixedly connected with the abutment member 21. Correspondingly, in Step S2, the step of applying a lifting force to the goods GD by the lifting mechanism 30 so that the goods GD get over the blocking mechanism BL in a state that the goods GD are pushed away from the blocking mechanism BL includes: driving the bracket 10 by the first driving mechanism 51 to move upward so as to drive the pushing mechanism 20 and the lifting mechanism 30 to move upward in a state that the pushing block 22 pushes the goods GD away from the blocking mechanism BL; and continuing to drive the bracket 10 to move upward by the first driving mechanism 51, so as to drive the lifting mechanism to move upward to apply a lifting force to the goods GD, and restricting the pushing mechanism 20 in position by the gravity conveying passage GC, so that the goods GD get over the blocking mechanism BL and the pushing mechanism 20 after the pushing mechanism 20 moves to a position where the abutment member 21 abuts against the blocking mechanism BL.

In some embodiments, the pushing mechanism 20 is rotatably connected with the bracket 10, and the pick-up device PU further includes an elastic member 41 connected with the abutment member 21. Correspondingly, the pick-up method further includes the following steps.

After the lifting mechanism 30 causes the goods GD at the bottommost end of the gravity convey passage GC to get over the blocking mechanism BL, the lifting mechanism 30 abuts against the next goods GD in the gravity convey passage GC so that the next goods GD is not in contact with the blocking mechanism BL.

The first driving mechanism 51 drives the bracket 10 to move downwards, so as to drive the lifting mechanism 30 to move downwards and depart from a position where the lifting mechanism 30 abuts against the next goods GD in the gravity conveying track GC.

As the bracket 10 moves downward, the elastic member 41 causes the pushing mechanism 20 to continue to be restricted in position by the gravity conveying rack GC, and abuts against the next goods GD in the gravity conveying rack GC through an elastic force to the abutment member 21.

The first driving mechanism 51 repeats driving the bracket 10 to move upward and downward, so as to realize a continuous pick-up operation of a plurality of goods GD in the gravity conveying track GC.

In some embodiments, the pick-up device PU further includes a driving member 42 which is drivingly connected with the pushing mechanism 20. Correspondingly, the pick-up method also includes: driving the pushing mechanism 20 to rotate to a position where the goods GD are not blocked by the pushing mechanism 20 du during the process that the goods GD are lifted or after the goods GD are lifted beyond the top of the blocking mechanism BL.

In some embodiments, the lifting mechanism 30 is movably connected with the bracket 10, the pushing mechanism 20 is fixedly arranged on the bracket 10 to move synchronously with the bracket 10, and the pick-up device PU further includes a first driving mechanism 51 and a second driving mechanism 52, wherein the first driving mechanism 51 is drivingly connected with the bracket 10, and the second driving mechanism 52 is arranged on the bracket 10 and drivingly connected with the lifting mechanism 30. Correspondingly, in Step S2, the step of applying a lifting force to the goods GD by the lifting mechanism 30 so that the goods GD get over the blocking mechanism BL in a state that the goods GD are pushed away from the blocking mechanism BL includes: driving the bracket 10 to move by the first driving mechanism 51 so as to drive the pushing mechanism 20 and the lifting mechanism 30 to move toward the gravity conveying rack GC; and driving the lifting mechanism 30 to move by the second driving mechanism 52 so as to apply a lifting force to the goods GD in a state that the pushing mechanism 20 pushes the goods GD away from the blocking mechanism BL.

Aplurality of embodiments in this specification are described in a progressive manner emphasized on different aspects respectively. Reference may be made to each other for the same or similar parts between respective embodiments. For the embodiments of the method, since the method as a whole and the steps involved therein are in correspondence with the content in the embodiments of the pick-up device, the descriptions are relatively simple. For the relevant aspects, reference may be made to some of the descriptions of the embodiments of the pick-up device.

Hereto, various embodiments of the present disclosure have been described in detail. Some details well known in the art are not described in order to avoid obscuring the concept of the present disclosure. According to the above description, those skilled in the art would fully understand how to implement the technical solutions disclosed here.

Although some specific embodiments of the present disclosure have been described in detail by way of examples, those skilled in the art should understand that the above examples are only for the purpose of illustration but not for limiting the scope of the present disclosure. It should be understood by those skilled in the art that modifications to the above embodiments and equivalently substitution of part of the technical features may be made without departing from the scope and spirit of the present disclosure. The scope of the present disclosure is defined by the appended claims.

## Claims

1. A pick-up device (PU) for picking up goods (GD) in a gravity conveying rack (GC) which are blocked by a blocking mechanism (BL) of the gravity conveying rack (GC), comprising:
a bracket (10);
a pushing mechanism (20) configured to push the goods (GD) away from the blocking mechanism (BL); and
a lifting mechanism (30) arranged on the bracket (10) and configured to apply a lifting force to the goods (GD) so that the goods (GD) get over the blocking mechanism (BL) in a state that the goods (GD) are pushed away from the blocking mechanism (BL).

2. The pick-up device (PU) according to claim 1, wherein the pushing mechanism (20) is configured to be restricted in position by the gravity conveying rack (GC) during a process that the lifting mechanism (30) lifts the goods (GD).

3. The pick-up device (PU) according to claim 1 or 2, wherein the pushing mechanism (20) comprises:
an abutment member (21) configured to abut against the gravity conveying rack (GC) so as to be restricted in position by the gravity conveying rack (GC) during a process that the lifting mechanism (30) lifts the goods (GD); and
a pushing block (22) fixedly connected with the abutment member (21) and configured to push the goods (GD) away from the blocking mechanism (BL).

4. The pick-up device (PU) according to claim 3, wherein the blocking mechanism (BL) comprises two blocking portions located at a bottom end of the gravity conveying rack (GC), and the pushing block (22) is configured to push the goods (GD) between the two blocking portions; the abutment member (21) comprises a cross beam (211), the pushing block (22) is located at the middle of the cross beam (211), and a dimension of the cross beam (211) in a width direction of the gravity conveying rack (GC) is greater than a distance between the two blocking portions in the width direction of the gravity conveying rack (GC) so as to abut against the two blocking portions during the process that the lifting mechanism (30) lifts the goods (GD).

5. The pick-up device (PU) according to claim 3 or 4, wherein the lifting mechanism (30) is further configured to restrict at least one of the pushing block (22) and the abutment member (21) in position before the goods (GD) are lifted.

6. The pick-up device (PU) according to claim 5, further comprising:
an elastic member (41) connected with the abutment member (21) to apply an elastic force to the abutment member (21).

7. The pick-up device (PU) according to claim 6, wherein the pick-up device (PU) comprises at least two pushing mechanisms (20), and respective ends of the elastic member (41) are connected with the at least two pushing mechanisms (20) respectively.

8. The pick-up device (PU) according to claim 7, wherein the pick-up device (PU) comprises two pushing mechanisms (20) and two lifting mechanisms (30) corresponding to the two pushing mechanisms (20) respectively, the abutment member (21) in each pushing mechanism (20) comprises a cross beam (211) and two side bars (212) so that the two side bars (212) are connected with both ends of the cross beam (211) respectively to form a portal structure with the cross beam (211), the two side bars (212) are hinged with the bracket (10) respectively, and the elastic member (41) comprises a spring, one end of which is connected with the side bar (212) of one of the two pushing mechanisms (20), and the other end of which is connected with the side bar (212) of the other of the two pushing mechanisms (20).

9. The pick-up device (PU) according to any one of claims 3-8, wherein the blocking mechanism (BL) comprises two blocking portions located at the bottom end of the gravity conveying rack (GC), and the lifting mechanism (30) comprises:
a lifting block (31) fixedly connected with the bracket (10) and configured to project between the two blocking portions to lift the goods (GD) at a lower side of the goods (GD);
wherein the lifting block (31) is provided with a through portion (311) through which the pushing block (22) movably passes.

10. The pick-up device (PU) according to any one of claims 2-9, wherein the lifting mechanism (30) is fixedly connected with the bracket (10) to move synchronously with the bracket (10), and the pushing mechanism (20) is movably arranged on the bracket (10);.
and optionally wherein the pick-up device (PU) further comprises:
a first driving mechanism (51) drivingly connected with the bracket (10) and configured to drive the bracket (10) to move, so as to drive the pushing mechanism (20) and the lifting mechanism (30) to move relative to the gravity conveying rack (GC).

11. The pick-up device (PU) according to any one of claims 2-10, wherein at least one of the pushing mechanism (20) and the lifting mechanism (30) is configured to abut against the next goods (GD) in the gravity conveying rack (GC) after causing the goods (GD) at the bottommost end of the gravity conveying rack (GC) to get over the blocking mechanism (BL).

12. The pick-up device (PU) according to claim 1, further comprising:
a driving member (42) drivingly connected with the pushing mechanism (20), and configured to drive the pushing mechanism (20) to rotate to a position where the goods (GD) are not blocked by the pushing mechanism (20) during a process that the goods (GD) are lifted or after the goods (GD) are lifted beyond a top of the blocking mechanism (BL).

13. The pick-up device (PU) according to claim 1 or 2, wherein the lifting mechanism (30) is movably connected with the bracket (10), and the pushing mechanism (20) is fixedly arranged on the bracket (10) to move synchronously with the bracket (10);
wherein the pick-up device (PU) further comprises:
a first driving mechanism (51) drivingly connected with the bracket (10) and configured to drive the bracket (10) to move, so as to drive the pushing mechanism (20) and the lifting mechanism (30) to move relative to the gravity conveying rack (GC); and
a second driving mechanism (52) arranged on the bracket (10) and drivingly connected with the lifting mechanism (30), wherein the second driving mechanism (52) is configured to apply a lifting force to the goods (GD) by driving the lifting mechanism (30) to move.

14. An automatic shipping system, comprising:
at least one gravity conveying rack (GC); and
the pick-up device (PU) according to any one of claims 1 to 13.

15. A pick-up method of the pick-up device (PU) according to any one of claims 1 to 13, comprising:
pushing the goods (GD) within a gravity conveying rack (GC) which are blocked by a blocking mechanism (BL) of a gravity conveying rack (GC) away from the blocking mechanism (BL), through a pushing mechanism (20);
applying a lifting force to the goods (GD) by a lifting mechanism (30) so that the goods (GD) get over the blocking mechanism (BL) in a state that the goods (GD) are pushed away from the blocking mechanism (BL) .
